Europäisches Patentamt

European Patent Office

Office européen des brevets

(11) Veröffentlichungsnummer: **0 150 070**
**A2**

## (12) EUROPÄISCHE PATENTANMELDUNG

(21) Anmeldenummer: 85100584.3

(22) Anmeldetag: 21.01.85

(51) Int. Cl.⁴: **H 02 K 29/00**
H 02 K 3/00, H 02 K 7/20

(30) Priorität: 19.07.84 US 632443
19.01.84 DE 3401776

(43) Veröffentlichungstag der Anmeldung:
31.07.85 Patentblatt 85/31

(84) Benannte Vertragsstaaten:
AT BE CH DE FR GB IT LI LU NL SE

(71) Anmelder: PAPST-MOTOREN GmbH & Co. KG
Karl-Maier-Strasse 1 Postfach 35
D-7742 St. Georgen/Schwarzwald 1(DE)

(72) Erfinder: Schmider, Fritz
Schlossstrasse 56d
D-7746 Hornberg(DE)

(74) Vertreter: Schwan, Gerhard, Dipl.-Ing.
Elfenstrasse 32
D-8000 München 83(DE)

(54) **Kollektorloser Gleichstommotor mit eisenloser Statorwicklung.**

(57) Kollektorloser Gleichstrommotor mit Permanentmagnetrotor und eisenloser Statorwicklung, die in einem Luftspalt zwischen Rotoreisenteilen angeordnet ist. Die dreiphasige Statorwicklung besteht aus wenigstens 3n einander nicht überlappenden oder überlappenden, äquidistant verteilten Spulen, und der Rotormagnet ist mit 2n Polen versehen, wobei n eine ganze Zahl ≧ 1 ist, oder es ist eine m-phasige Statorwicklung aus 2 × m × n einander überlappenden, äquidistant und gleichmäßig verteilten Spulen vorgesehen, die im wesentlichen als kontinuierlich am Luftspalt in Bewegungsrichtung gleichmäßig verteilte Leiter der Einzelwindungen ausgebildet sind, und der Rotormagnet ist mit 2n Polen versehen, wobei m und n eine ganze Zahl und n ≧ 1 und m > 1 ist und wobei jede Spule zur m-ten, in Bewegungsrichtung nächsten Spule einen entgegengesetzten Wickelsinn aufweist und mit ihr elektrisch leitend verbunden ist.

Fig. 1

EP 0 150 070 A2

EU-317

- 1 -

Kollektorloser Gleichstrommotor
mit eisenloser Statorwicklung

Die Erfindung betrifft einen kollektorlosen Gleichstrommotor
mit Permanentmagnetrotor und eisenloser Statorwicklung, die
in einem Luftspalt zwischen Rotoreisenteilen angeordnet ist.

Ein solcher Motor ist bekannt (Aufsatz "Ein elektronisch
kommutierter Doppelzylinderläufermotor" in VDI-Bericht
Nr. 482, 1983, Seite 17). Der Rotor des bekannten Motors
weist eine Vielzahl (dort 24) von quaderförmigen Seltenerd-
Kobalt-Magneten auf. Er umfaßt vier Rotorpole mit je sechs
Magneten. Über die Anzahl der Statorspulen und deren Lage
ist in dem Aufsatz nichts gesagt.

Es ist bei solchen Motoren problematisch, eine effektive
Kupferverteilung in einer einlagigen Wicklung unterzubringen.

Auf dem Markt ist auch bereits ein kollektorloser Kopfradmotor für Videorecorder mit eisenlosen Zylinderspulen sowie
rotierend angeordnetem Permanentmagnet und zugehörigen Eisenrückschlußteilen bekannt, der vier äquidistante Spulen
und sechs Rotorpole aufweist. Bei einer solchen Auslegung
ist die Forderung, vor allem im Falle von axialer Kompaktheit des Motors, einen hohen Anteil des Kupfers zur Drehmomenterzeugung heranzuziehen, nicht zu erfüllen.

Der Erfindung liegt die Aufgabe zugrunde, einen kollektorlosen Gleichstrommotor mit eisenloser Statorwicklung zu schaffen, der gegenüber bekannten Motoren der genannten Art höheren Wirkungsgrad und verbessertes Leistungsgewicht hat und der ein besonders gleichmäßiges Drehmoment abgibt.

Diese Aufgabe wird erfindungsgemäß dadurch gelöst, daß die als dreiphasige Wicklung ausgebildete Statorwicklung aus wenigstens 3n einander nicht überlappenden, äquidistant verteilten, konzentrierten Spulen besteht und der Rotormagnet mit 2nPolen versehen ist, wobei n eine ganze Zahl $\geqq$ 1 und vorzugsweise gleich 2 ist.

Eine solche Lösung hat den besonderen Vorteil, daß im Luftspalt relativ viel elektromotorisch wirksames Leitungsmaterial untergebracht werden kann und sich dieses Leitungsmaterial weitgehend effektiv parallel erstreckt. Es werden verbesserter Wirkungsgrad und verbessertes Leistungsgewicht erzielt. Bei gleicher Luftspaltproportion stehen ein hohes Leistungsvolumen und ein relativ gleichmäßiges Drehmoment zur Verfügung. Die Vorteile wirken sich insbesondere bei beschränkter axialer Länge des Motors, d.h. axialer Kompaktheit, aus. Aus der DE-OS 31 22 049 ist zwar ein kollektorloser Gleichstromaußenläufermotor mit sechs überlappungsfreien Statorspulen und vier Rotorpolen bei dreisträngiger Ausbildung der Statorwicklung bekannt. Dort handelt es sich aber um einen genuteten Stator, bei dem die Statorspulen um die Schenkel von T-förmigen Statorpolen herumgewickelt sind.

Entsprechend einer abgewandelten erfindungsgemäßen Lösung besteht die dreiphasige Statorwicklung aus wenigstens 3n einander überlappenden, über dem Luftspalt in Bewegungsrichtung des Rotors äquidistant verteilten Spulen, und der Rotormagnet ist mit 2n Polen versehen, wobei n eine ganze Zahl $\geqq$ 1 ist, wobei zweckmäßig die Spulen als kontinuierlich am Luftspalt gleichmäßig verteilte Leiter der Einzelverbindungen ausgebildet sind oder die Spulen als eine gleichsinnig in Bewegungsrichtung durchgehend gewickelte Anordnung mit herausgezogenen Anschlußstellen ausgeführt sind.

Eine weiter abgewandelte Lösung zeichnet sich erfindungsgemäß dadurch aus, daß eine m-phasige Statorwicklung aus $2 \times m \times n$ einander überlappenden, äquidistant und gleichmäßig verteilten Spulen besteht, die im wesentlichen als kontinuierlich am Luftspalt in Bewegungsrichtung gleichmäßig verteilte Leiter der Einzelwindungen ausgebildet sind, und der Rotormagnet mit 2n Polen versehen ist, wobei m und n eine ganze Zahl und $n \stackrel{>}{=} 1$ und $m > 1$ ist und wobei jede Spule zur m-ten, in Bewegungsrichtung nächsten Spule einen entgegengesetzten Wickelsinn aufweist und mit ihr elektrisch leitend verbunden ist. Dabei ist vorteilhaft jede Spule zur m-ten nächsten fortlaufend durchgehend, aber mit Umkehrung des Wickelsinns gewickelt.

Der Luftspalt ist in weiterer Ausgestaltung der Erfindung zweckmäßig zylindrisch, wobei die Spulen vorteilhaft Teil eines hohlzylindrischen, insbesondere hülsenförmigen, eisenlosen Statorkörpers sind, der einfach dadurch erhalten werden kann, daß die Spulen mit einer Kunststoffmasse umspritzt sind. Die Spulen bzw. der diese Spulen beinhaltende Statorkörper sind (ist) vorteilhaft von der einen Stirnseite her gehaltert und zu diesem Zweck z.B. in einen ringförmigen Bereich einer Spulenhalterung eingebettet. Die Montage wird besonders einfach, wenn die Spulen auf ihrer Halterungsseite in eine Spulenanschlüsse tragende gedruckte Leiterplatte eingelassen sind, wobei die zum Umspritzen der Spulen vorgesehene Kunststoffmasse auch in Ausnehmungen der Leiterplatte eingespritzt sein kann.

In weiterer Ausgestaltung der Erfindung trägt die Leiterplatte zugleich den z.B. als Mäandertachowicklung ausgebildeten Statorteil eines Tachogenerators, während der Rotorteil des Tachogenerators von einem Magnetring gebildet sein kann, der von den Rotoreisenteilen getragen ist.

Eine besonders robuste Konstruktion wird erhalten, wenn die Rotoreisenteile einen Rotortopf, dessen Umfangswand die Spulen von außen umgreift, und einen zu den Spulen und dem Rotortopf konzentrischen, auf der Innenseite der Spulen liegenden Rotorzylinder aufweisen. Der Rotortopf kann beispielsweise als Tiefziehteil ausgebildet und mit dem Rotorzylinder auf beliebige Weise verbunden sein. Rotortopf und Rotorzylinder können aber auch zu einem einstückigen, vorzugsweise gesinterten, Rotorbauteil zusammengefaßt sein.

Der Rotormagnet ist zweckmäßig an der zylindrischen Außenfläche des Rotorzylinders angebracht und zusammen mit den Rotoreisenteilen von der gleichen Stirnseite her gelagert wie die Spulen. Dabei kann der Rotorzylinder vorteilhaft auf der vom Boden des Rotortopfs abliegenden Seite über eine Buchse mit einer Antriebswelle verbunden sein.

Zweckmäßig weist der Motor ein topfförmiges Gehäuse auf, an dessen Bodeninnenseite die Spulenhalterung befestigt und/oder der Rotor drehbar abgestützt oder gehaltert sein kann. Die mechanisch relativ empfindliche Spulenanordnung ist besonders gut geschützt, wenn der Boden des Gehäuses und der Boden des Rotortopfs benachbart gegenüberliegenden Stirnseiten der Spulen sitzen. Besteht nicht nur der Rotortopf, sondern auch das Gehäuse aus magnetisch gut leitendem Werkstoff, wird durch diese Ausführungsform außerdem eine besonders wirkungsvolle magnetische Abschirmung erzielt. Rotor und Stator des Motors können zu einer vormontierten Einheit zusammengefaßt sein, die sich mit einer vorhandenen Antriebswelle lösbar verbinden läßt. Der Magnetring des Tachogenerators kann besonders einfach an der vom Boden des Rotortopfs abgewendeten Stirnseite der Rotortopf-Umfangswand angebracht sein.

Die Erfindung ist im folgenden anhand von bevorzugten Ausführungsbeispielen näher erläutert. In den beiliegenden Zeichnungen zeigen:

Fig. 1      einen Schnitt durch einen Gleichstrommotor entsprechend einem ersten Ausführungsbeispiel der Erfindung,

Fig. 2      einen Teilschnitt eines Motors gemäß einer zweiten Ausführungsform,

Fig. 3      einen Teilschnitt ähnlich Fig. 2 für eine dritte Ausführungsform des Motors nach der Erfindung,

Fig. 4      einen Schnitt durch den Rotor eines Motors gemäß einer weiteren Ausführungsform der Erfindung,

Fig. 5      eine teilweise geschnittene Darstellung einer Ausführungsform des Tators des Motors nach der Erfindung,

Fig. 6      eine Draufsicht auf den Stator gemäß Fig. 5,

Fig. 7      eine Draufsicht auf die Leiterplatte mit Mäandertachowicklung,

Fig. 8      die Abwicklung einer abgewandelten Statorspulenanordnung,

Fign. 9A    weiter abgewandelte Spulensysteme,
bis  9D

Fign.10A    schematisch eine Ausführungsform eines zweiphasigen Motors mit zweipoligem Rotor,
und 10B

Fig. 10C    schematisch eine weiter abgewandelte Ausführungsform eines erfindungsgemäßen Motors, und

Fig. 11        eine perspektivische Prinzipdarstellung der Statorspulenanordnung nach den Fign. 8, 9A bis 9D, 10A oder 10C.

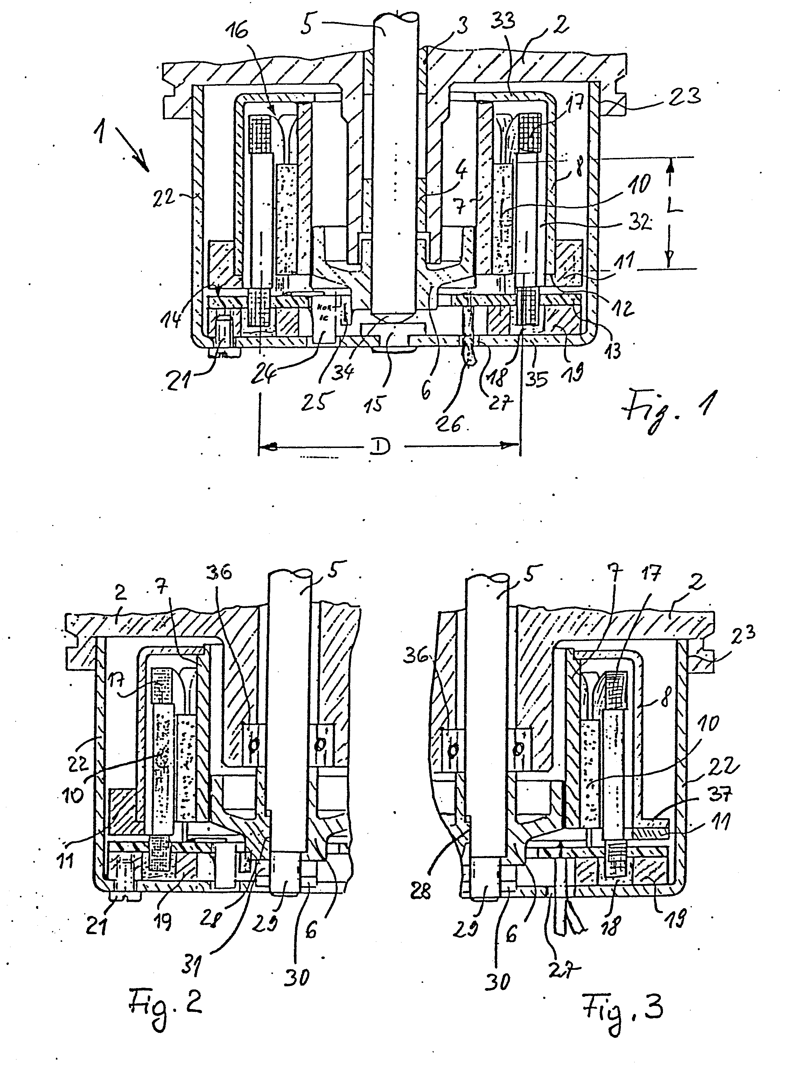

Bei dem Ausführungsbeispiel nach Fig. 1 kann es sich um den Antriebsmotor 1 eines nicht dargestellten Videorecorders handeln. In einem Lagerflansch 2 sind Gleitlager 3, 4 zur Lagerung einer Antriebswelle 5 befestigt. Auf dem in Fig. 1 unteren Ende der Antriebswelle 5 ist eine Rotorbuchse 6 fest angebracht. Die Rotorbuchse 6 ist mit einem bezüglich der Statorwicklung innenliegenden Rotorzylinder 7 sowie über diesen mit einem bezüglich der Statorwicklung außenliegenden Rotortopf 8 fest verbunden. Der Rotorzylinder 7 und der Rotortopf 8 bestehen aus weichmagnetischem Material. Sie sind am Boden 33 des Rotortopfes 8 durch Schweißen (in Fig. 1 angedeutet), Stauchen oder Rollieren (in Fig. 2 angedeutet) oder auf ähnliche Weise zusammengefügt. Ein Rotormagnet 10 befindet sich auf der Außenfläche des Rotorzylinders 7. Der Rotormagnet 10 wird von einem Dauermagnetring gebildet, der derart radial magnetisiert ist, daß auf der Mantelfläche des Magneten in Umfangsrichtung vier Magnetpole (zwei magnetische Nordpole und zwei damit abwechselnde magnetische Südpole) entstehen, wie dies beispielsweise in Fig. 1 der oben genannten DE-OS 31 22 049 näher dargestellt ist. An Stelle eines einteiligen Magnetrings können zur Bildung des Rotormagneten 10 auch mehrere gesonderte Magnetsegmente vorgesehen sein.

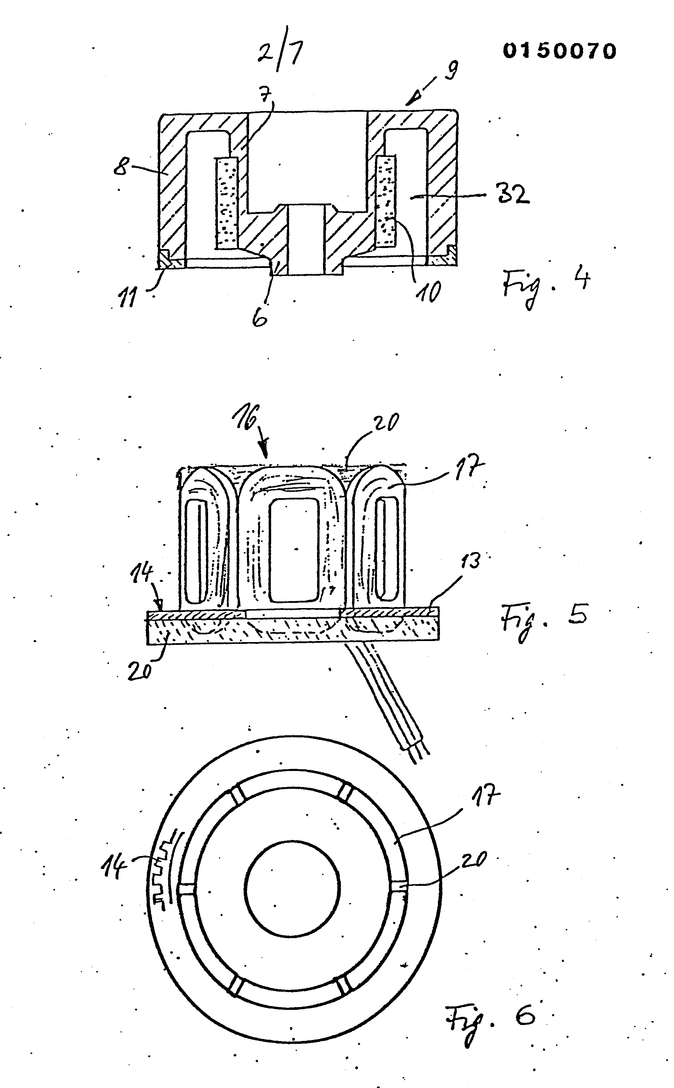

Gegenüber der offenen Seite des Rotortopfes 8 ist eine ringförmige gedruckte Leiterplatte 13 angeordnet. Auf der dem Rotortopf 8 zugewendeten Seite der Leiterplatte 13 sitzt radial außen eine planare Mäandertachowicklung 14 mit z.B. 32 oder 48 Polen mit oder ohne Kompensationsschleife. Solche Mäandertachowicklungen und zugehörige Kompensationsschleifen sind beispielsweise aus der DE-OS 29 27 958 bekannt und bedürfen infolgedessen vorliegend keiner näheren Erläuterung. Der Rand 12 des Rototopfs 8 trägt einen mit der Mäandertachowicklung 14 einen Tachogenerator bildenden, planaren, entsprechend hochpoligen Magnetring 11 mit Eisenrückschluß. Der Rückschluß kann durch einen zusätzlich aufgesetzten Ring oder einen aufgesetzten oder beim Tiefziehen des Rotortopfes 8 angedrückten Wulst 37 (Fig. 3) bestehen.

Radial innerhalb der ringförmigen Leiterplatte 13 sitzt ein magnetfeldabhängiger Drehstellungssensor 24, beispielsweise in Form eines Hall-ICs mit radial nach innen sensibler Richtung. Auf die Rotorbuchse 6 ist ein Permanentmagnet 25 aufgesetzt, der an dem Sensor 24 vorbeiläuft. Bei jedem solchen Vorbeilauf gibt der Sensor 24 einen Impuls ab.

Die Welle 5 weist an ihrem in Fig. 1 unteren Ende eine Kuppe 34 auf, die auf einer axialen Gleitlagerung 15 läuft.

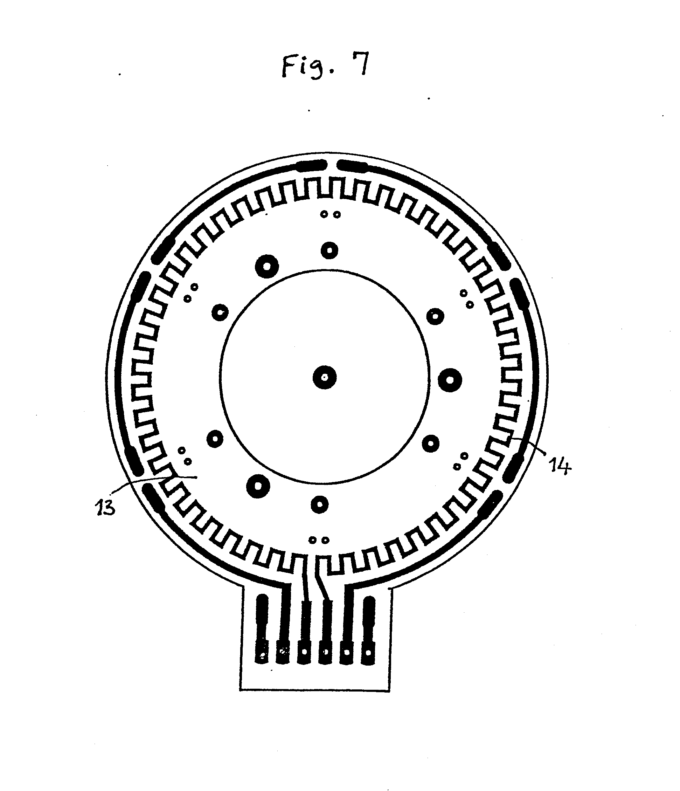

Die Innenwandung des Rotortopfs 8 und die Außenwand des Rotormagneten 10 begrenzen einen zylindrischen Luftspalt 32, in dem ein Stator 16 mit einer Folge von einander nicht überlappenden, konzentrischen Spulen 17 angeordnet ist. Bei dem veranschaulichten Ausführungsbeispiel sind, wie im einzelnen aus den Fign. 5 und 6 hervorgeht, sechs äquidistante, in Umfangsrichtung im wesentlichen unmittelbar aneinander anschließende Spulen vorgesehen, die vorzugsweise unter Bildung eines im wesentlichen hülsenförmigen Statorkörpers mit einer Kunststoffmasse 20 umspritzt sind. Letztere verleiht dem Stator 16 relativ hohe Stabilität.

Die erläuterte Anordnung erlaubt es, in dem zylindrischen Luftspalt 32 zwischen Rotormagnet 10 und Rotortopf 8 besonders viel zur Drehmomenterzeugung beitragendes Leitungsmaterial (im allgemeinen Kupferdraht) unterzubringen. Damit werden ein erhöhter Wirkungsgrad und ein besseres Leistungsgewicht erzielt. Im Vergleich zu bekannten ähn-

- 8 -

lichen Motoren kommt man zu gleichmäßigerem Drehmoment und höherem Leistungsvolumen. Dies gilt insbesondere bei axial kompakt aufgebauten Motoren, d.h. Motoren, bei denen das Verhältnis zwischen dem mittleren Durchmesser D des Luftspalts 32 und der effektiven Leiterlänge L der Spulen 17 größer als 0,5 und vorzugsweise größer als 1 ist.

Die Spulen 17 greifen im Bereich ihrer einen Stirnseite durch entsprechende Ausnehmungen der Leiterplatte 13 hindurch, und sie sind in einen Bereich 18 einer ringförmigen Spulenhalterung 19 eingebettet. Die Wicklungsenden der Spulen 17 sind zweckmäßig mit Spulenanschlüssen verbunden, die auf der Leiterplatte 13 vorgesehen sind (nicht näher veranschaulicht). Die Spulenhalterung 19 bzw. der von den Spulen 17 und der Kunststoffmasse 20 gebildete Statorkörper sind mit Schrauben 21 am Boden 35 eines topfförmigen Gehäuses 22 befestigt. Das Gehäuse 22 ist in einer entsprechenden Ausnehmung 23 des Lagerflanschs 2 festgemacht. Der Boden 35 des Gehäuses 22 trägt die Gleitlagerung 25. Ein Anschlußkabel 26 führt von der Leiterplatte 13 durch eine Öffnung 27 des Bodens 35 hindurch.

Während sich das in Fig. 1 dargestellte Ausführungsbeispiel besonders als komplette Antriebseinheit eignet, zeigen die Fign. 2 und 3 Ausführungsformen eines Motors, der als Zulieferungsteil einen nachträglichen Anbau ermöglicht. In diesem Fall sind der Lagerflansch 2, die Welle 5 und im Lagerflansch 2 befestigte Kugellager 36 vorhanden. Die Welle 5 weist bei diesen Ausführungsformen eine Führungsfläche 28, beispielsweise in Form einer Abflachung, und einen vorzugsweise Außengewinde tragenden Ansatz 29 auf. Das dargestellte eine Kugellager 36 ist - ebenso wie das eine Gleitlager 4 - etwa im Bereich der Mitte des magnetisch wirksamen Luftspalts 32 angeordnet. Die übrigen, oben beschriebenen Einzelteile des Antriebsmotors sind komplett vormontiert und werden in vormontierter Form auf die Welle 5 bzw. in die Ausnehmung 23 des Lagerflanschs 2 geschoben. Dann wird eine Scheibe 31 auf den Ansatz 29 gesteckt. Auf das Außengewinde des Ansatzes 29 wird eine Mutter 30 aufgeschraubt.

Entsprechend der abgewandelten Ausführungsform nach Fig.4 können der Rotorzylinder 7, der Rotortopf 8 und die Rotorbuchse 6 auch zu einem doppelzylinderförmigen einstückigen Rotorbauteil 9 zusammengefaßt sein, das zweckmäßig aus weichmagnetischem Sintereisen gefertigt werden kann. Dabei müssen nur der äußere Mantel des Rotorzylinders 7 im Bereich der Anbringung des Rotormagneten 10 und die eine Stirnseite des Rotorzylinders zur Befestigung des Magnetrings 11 spanabhebend bearbeitet werden. Daraus ergibt sich gegenüber den Ausführungsformen gemäß den Fign. 1 bis 3 eine erhebliche Kostensenkung.

Bei den Ausführungsformen nach den Fign. 1 und 2 ist in Verbindung mit der dreiphasigen Statorwicklung nur ein einziger Drehstellungssensor 24 vorhanden. Dieser Sensor 24 kann an einen Mikroprozessor angeschlossen sein, der als Kommutierungsteuereinrichtung dient und über eine entsprechende Endstufe für eine zyklische Beaufschlagung der Spulen 17 mit Strom sorgt, wie dies im einzelnen in der DE-Patentanmeldung P 33 41 731.8 erläutert ist. Stattdessen können grundsätzlich aber auch in der für kollektorlose Gleichstrommotoren mit Dreiphasenwicklung üblichen Weise drei Drehstellungssensoren vorgesehen sein, wie dies beispielsweise in der DE-OS 31 22 049 und der DE-Patentanmeldung P 33 31 940.5 erläutert ist.

Im Falle der zuvor erläuterten Ausführungsbeispiele ist der Rotormagnet 10 jeweils vierpolig ausgelegt, und der Stator weist sechs Statorspulen 17 auf. Die Spulen 17 können in an sich bekannter Weise (Fig. 4 des Aufsatzes Dr.Ing. R. Müller "Gleichstrommotoren mit elektronischem Kommutator - Prinzipien und Anwendungen zweipulsiger kollektorloser Gleichstrommotoren", VDI-Berichte, Nr. 482, 1983) an Schaltglieder, z.B. Leistungstransistoren, angeschlossen sein. Beispielsweise können jeweils zwei einander diametral gegenüberliegende Spulen in Reihe geschaltet sein, und die jeweils einen Enden der so entstehenden drei Reihenschaltungen können untereinander verbunden sein, während die jeweils anderen Enden der drei Reihenschaltungen mit jeweils einem von drei Leistungstransistoren verbunden sind, die in zyklischer Folge stromführend gemacht werden. Es wird auf diese Weise ein sogenannter dreipulsiger Motor erhalten. Dabei fließt in jedem der drei von jeweils zwei Spulen gebildeten Spulenstränge während einer Zeitspanne, die einer Rotordrehung von beispielsweise etwa 180°$_{el}$ entspricht, Strom, während für die anschließende Zeitspanne von etwa 180°$_{el}$ das zugehörige Schaltglied stromlos gemacht wird. Die jeweils einander gegenüberliegenden Spulen können statt in Reihe gegebenenfalls auch untereinander parallel geschaltet sein. Entsprechend einer abgewandelten Ausführungsform können die wiederum paarweise in Serie oder parallelgeschalteten Spulen, wie ebenfalls an sich bekannt (Fig. 6 des vorstehend genannten Aufsatzes), über sechs Schaltglieder, z.B. Leistungstransistoren, angesteuert werden, um einen sogenannten sechspulsigen Motor zu erhalten. Im sechspulsigen Betrieb führt jeder der Spulenstränge zyklisch während beispielsweise etwa $180°_{el}$ Strom in einer Richtung, und für die anschließende Zeitspanne von etwa $180°_{el}$ wird die Stromflußrichtung umgekehrt. Die Strombeaufschlagung der Spulen kann aber auch von etwa $180°_{el}$ verkürzt werden, z.B. nur etwa $120°_{el}$ betragen. Die Ansteuerung der Schaltglieder erfolgt über die erwähnten Drehstellungssensoren oder über den von dem einzigen Drehstellungssensor 24 gesteuerten Mikroprozessor.

Die Mäanderwicklung 14 kann in der in Fig. 7 veranschaulichten Weise ausgebildet sein.

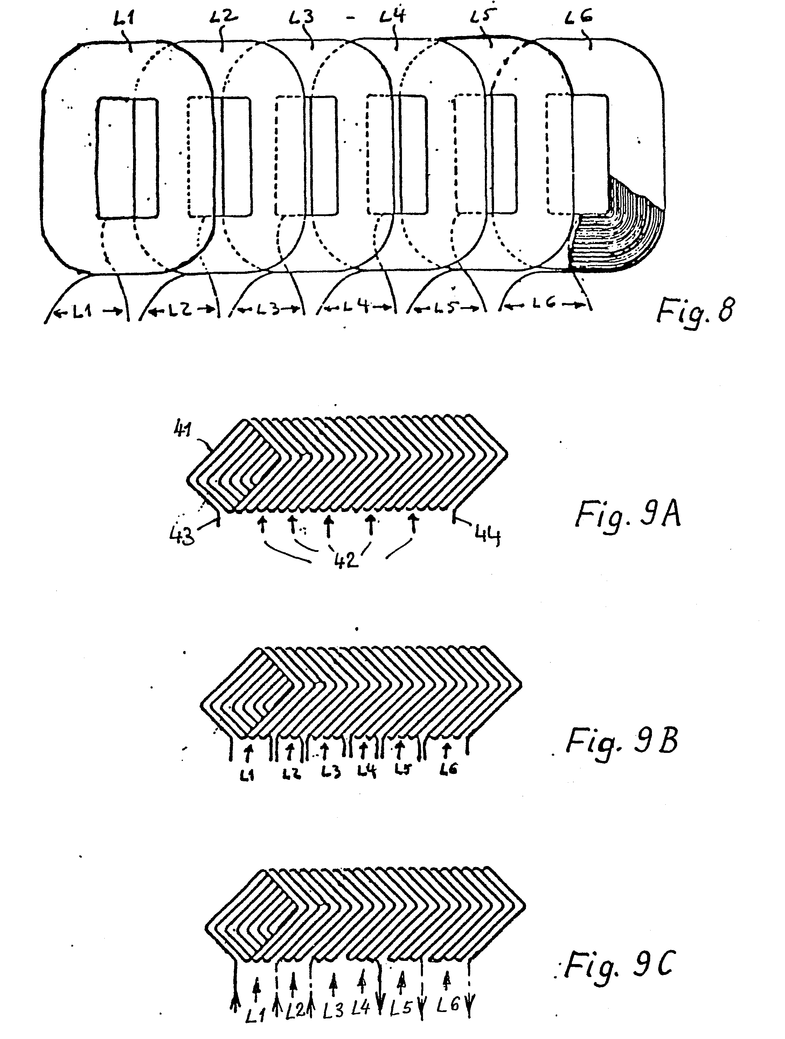

Fig. 8 zeigt eine Alternative zu dem oben erläuterten einlagigen Wicklungssystem. Dabei besteht die dreiphasige Statorwicklung aus sechs einander überlappenden, äquidistant verteilten Spulen 17, die zur gegenseitigen Unterscheidung mit L1 bis L6 bezeichnet sind. Das Spulensystem ist in ebener Abwicklung dargestellt; es versteht sich jedoch, daß die Spulen eine endlose Folge bilden. Jede der einzelnen Spulen weist ein innenliegendes und ein außenliegendes Ende auf, um die Spulen in der oben diskutierten Weise anzuschließen. Die Wickeltechnik ist ähnlich wie in der US-PS 1 796 556 veranschaulicht.

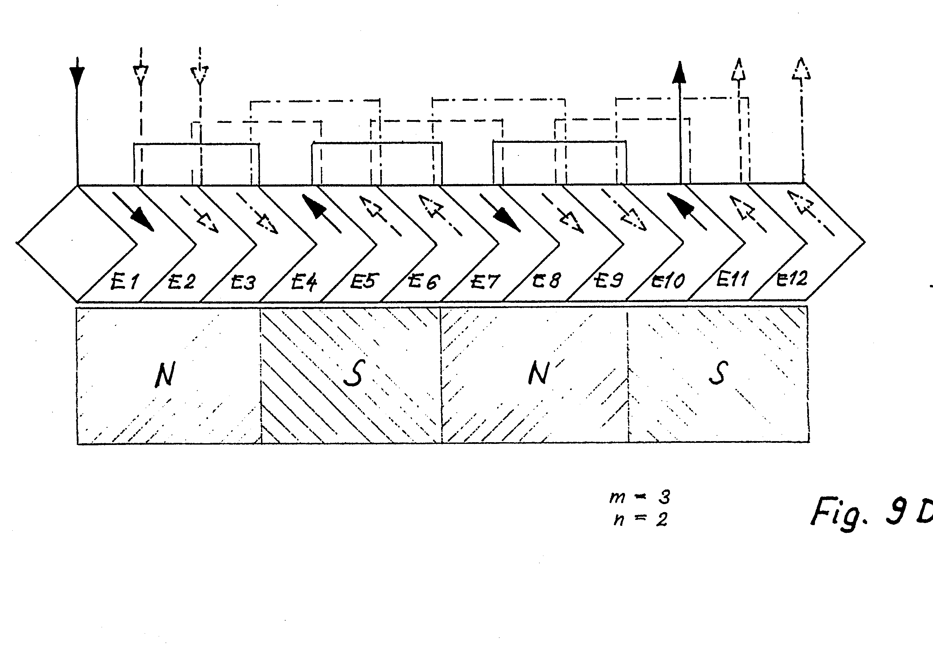

In den Fign. 9A und 9B ist eine weitere vorliegend in Betracht kommende Wicklungsausführung wiederum in abgewickelter Form dargestellt, die ähnlich den Lösungen gemäß der US-PS 3 964 684 ist. Die Spulen sind von einem Leiter 41 gebildet, der zu einer Folge von einander überlappenden Einzelwindungen gewickelt ist und, wie durch Pfeile 42 angedeutet ist, in entsprechenden Abständen an fünf Stellen unterbrochen wird. Dadurch entstehen zusammen mit den Leiterenden 43, 44 insgesamt 12 zugängliche Spulenanfänge bzw. Spulenenden für die insgesamt sechs Spulen L1 bis L6.

Fig. 9C zeigt als Variante zur Ausführungsform der Fig. 9B eine vorteilhafte Ausgestaltung, bei der die Spulen L1 und L4, bzw. L2 und L5, bzw. L3 und L6 hintereinander geschaltet sind, indem z.B. die Spule L2 in der Spule L5 fortgewickelt wird, jedoch die Spulen L2 und L5 unterschiedlichen Wicklungssinn aufweisen. Das Ende der Spule L2 und der Anfang der Spule L5 sind also abweichend von der Lösung der Fig. 9B nicht separat herausgeführt. Vielmehr stellen die betreffenden Leiterteile die Zwischenverbindung zwischen den mit entgegengesetztem Wickelsinn gewickelten Spulen dar. Entsprechend ist die Spule L6 mit zur Spule L3 umgekehrtem Wickelsinn gewickelt, und die Wickelrichtung der Spule L4 ist entgegengesetzt zu dem der Spule L1.

In Fig. 9D ist dies noch genauer gezeigt. Dabei ist die Wicklung so aufgeteilt, daß für die dreiphasige Anordnung pro Rotorpol drei Einzelspulen vorgesehen sind. Allgemein gilt, daß im Falle von m-Phasen m-Einzelspulen vorhanden sind, und daß jede Phase sich nach einer Polteilung, jedoch mit umgekehrtem Wicklungssinn, fortsetzt. So ist z.B., wie die eingezeichneten Pfeile zeigen, unter jeweiliger Umkehrung des Wickelsinns die zweite Phase von der Einzelspule E2 in die Einzelspule E5, dann in die Einzelspule E8 und dann in die Einzelspule E11 fortgesetzt.

Die Beschaltung des Spulensystems gemäß Fig. 9D erfolgt wiederum in an sich bekannter Weise.

Die genannte Wicklungsaufteilung und Wicklungsanordnung bedingen zwar eine kompliziertere Wicklungsmethode, sind aber bei der Verlötung der Anschlüsse besonders lohnkostensparend, weil die Anzahl der herauszuführenden Zwischenschaltverbindungen, besonders bei zunehmender Polzahl, relativ klein ist. Durch die fortwährende Umkehrung des Wickelsinnes in einem von der Phasenzahl abhängigen Abstand wird, obwohl die Anzahl der herauszuführenden Anschlußdrähte verringert ist, eine vollkommene gegenseitige galvanische Trennung der Wicklungsstränge erreicht. Die Kupferausnutzung ist verbessert; der Wirkungsgrad ist erhöht.

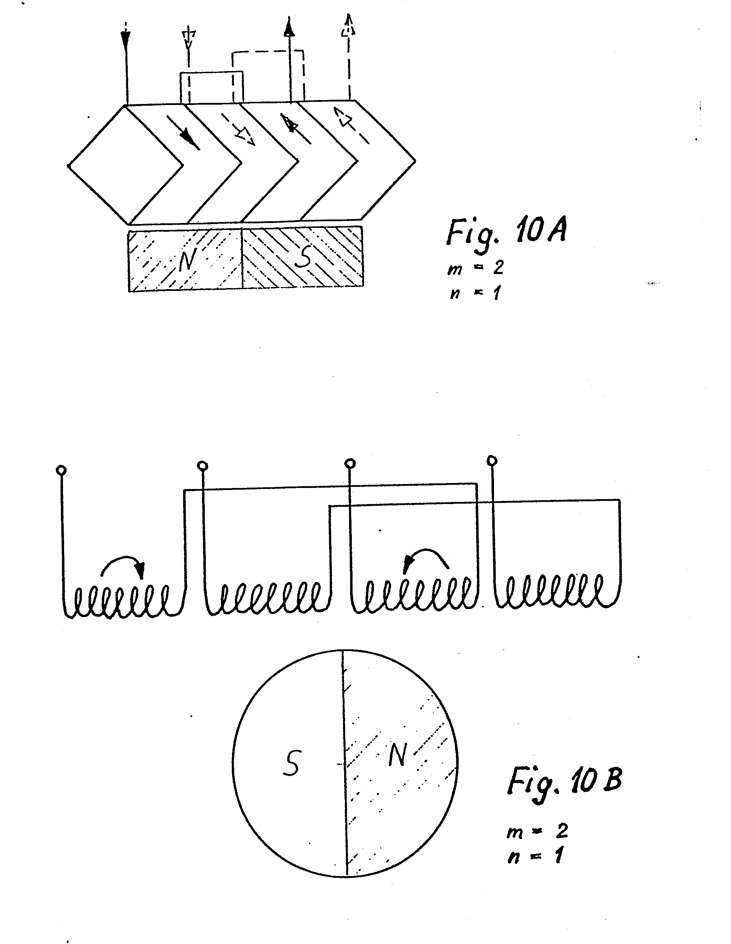

Die Fign. 10A und 10B zeigen eine Ausführungsform der vorstehend diskutierten Art für einen zweiphasigen Motor mit nur zweipoligem Rotor. Auch in diesem Falle ist ein verbesserter Wirkungsgrad sichergestellt.

In Fig. 10C ist eine Ausführungsform mit sechs Rotorpolen und entsprechend sechs Gruppen von Statorwicklungsteilen dargestellt. Dabei ist pro Polteilung eine Gruppe mit paralleler Stromrichtung vorgesehen, d.h. pro Gruppe sind zwei nebeneinanderliegende Spulenteile vorhanden, die in gleicher Richtung bestromt werden und mit denen gemeinsam der N- oder S-Pol motorisch zusammenwirken. Allgemein gilt, daß pro Pol des Rotors m-Einzelspulen parallel in gleicher Richtung bestromt werden und dadurch mit entsprechender Umschaltung ein vorteilhafter Motorbetrieb möglich ist.

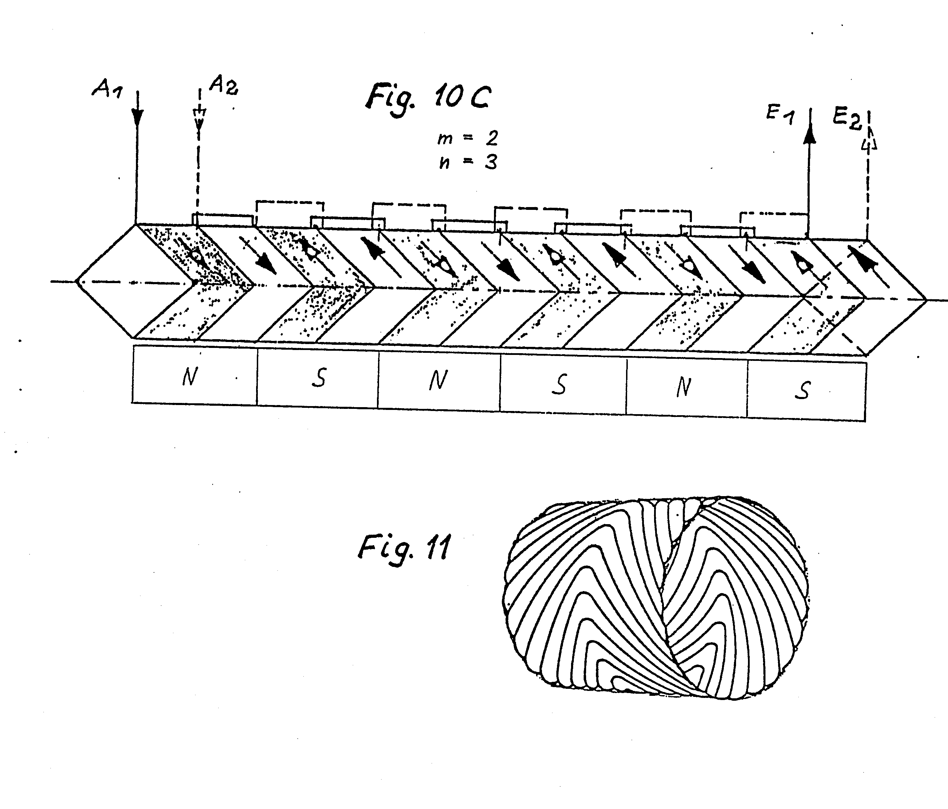

Fig. 11 zeigt in perspektivischer Ansicht die in den Fign. 9A bis 10C dargestellten Wicklungsstreifen, die zu einem hohlen zylindrischen Körper zusammengerollt sind, wobei die Enden der Windungen ineinander übergehen und die Windungen fortlaufend untereinander verbunden sind. Die Anschlüsse, z.B. die in Fig. 10C veranschaulichten Anschlüsse A1, E1, A2 und E2, sind an der einen oder der anderen Stirnseite des zylinderförmigen Körpers herausgeführt.

EU-317

Papst-Motoren

GmbH & Co. KG

7742 St. Georgen/Schwarzw.

## A n s p r ü c h e

1. Kollektorloser Gleichstrommotor mit Permanentmagnetrotor und eisenloser Statorwicklung, die in einem Luftspalt zwischen Rotoreisenteilen angeordnet ist, dadurch gekennzeichnet, daß die dreiphasige Statorwicklung aus wenigstens 3n einander nicht überlappenden, äquidistant verteilten, konzentrierten Spulen (17) besteht und der Rotormagnet (10) mit 2n Polen versehen ist, wobei n eine ganze Zahl $\geqq$ 1 ist.

2. Kollektorloser Gleichstrommotor mit Permanentmagnetrotor und eisenloser Statorwicklung, die in einem Luftspalt zwischen Rotoreisenteilen angeordnet ist, dadurch gekennzeichnet, daß die dreiphasige Statorwicklung aus wenigstens 3n einander überlappenden, über dem Luftspalt in Bewegungsrichtung des Rotors äquidistant verteilten Spulen (17) besteht und der Rotormagnet (10) mit 2n Polen versehen ist, wobei n eine ganze Zahl $\geqq$ 1 ist.

3. Kollektorloser Gleichstrommotor mit Permanentmagnetrotor und mehrphasiger eisenloser Statorwicklung, die in einem Luftspalt zwischen Rotoeisenteilen angeordnet ist, dadurch gekennzeichnet, daß eine m-phasige Statorwicklung aus 2 x m x n einander überlappenden, äquidistant und gleichmäßig verteilten Spulen (17) besteht, die im wesentlichen als kontinuierlich am Luftspalt in Bewegungsrichtung gleichmäßig verteilte Leiter der Einzelwindungen ausgebildet sind, und der Rotormagnet (10) mit 2n Polen versehen ist, wobei m und n eine ganze Zahl und n $\geqq$ 1 und

- 2 -

m > 1 ist und wobei jede Spule zur m-ten, in Bewegungsrichtung nächsten Spule einen entgegengesetzten Wickelsinn aufweist und mit ihr elektrisch leitend verbunden ist.

4. Gleichstrommotor nach Anspruch 1 oder 2, dadurch gekennzeichnet, daß sechs Spulen (17) vorgeshen sind und der Rotormagnet (10) vier Pole aufweist.

5. Gleichstrommotor nach Anspruch 2, dadurch gekennzeichnet, daß die Spulen als kontinuierlich am Luftspalt gleichmäßig verteilte Leiter der Einzelverbindungen ausgebildet sind.

6. Gleichstrommotor nach Anspruch 2, dadurch gekennzeichnet, daß die Spulen als eine gleichsinnig in Bewegungsrichtung durchgehend gewickelte Anordnung mit herausgezogenen Anschlußstellen ausgeführt sind.

7. Gleichstrommotor nach Anspruch 3, dadurch gekennzeichnet, daß jede Spule zur m-ten nächsten fortlaufend durchgehend, aber mit Umkehrung des Wickelsinns gewickelt ist.

8. Gleichstrommotor nach einem der vorhergehenden Ansprüche, dadurch gekennzeichnet, daß der Luftspalt (32) zylindrisch ist.

9. Gleichstrommotor nach Anspruch 8, dadurch gekennzeichnet, daß die Spulen (17) Teil eines hohlzylindrischen, eisenlosen Statorkörpers (17, 20) sind.

10. Gleichstrommotor nach einem der vorhergehenden Ansprüche, dadurch gekennzeichnet, daß die Spulen (17) mit einer Kunststoffmasse (20) umspritzt sind.

11. Gleichstrommotor nach einem der vorhergehenden Ansprüche, dadurch gekennzeichnet, daß die Spulen (17) von ihrer einen Stirnseite her gehaltert sind.

12. Gleichstrommotor nach Anspruch 11, dadurch gekennzeichnet, daß die Spulen (17) in einen ringförmigen Bereich (18) einer Spulenhalterung (19) eingebettet sind.

13. Gleichstrommotor nach Anspruch 12, dadurch gekennzeichnet, daß die Spulen (17) auf ihrer Halterungsseite in eine Spulenanschlüsse tragende gedruckte Leiterplatte (13) eingelassen sind.

14. Gleichstrommotor nach Anspruch 10 und 13, dadurch gekennzeichnet, daß die Kunststoffmasse (20) in Ausnehmungen der Leiterplatte (13) eingespritzt ist.

15. Gleichstrommotor nach Anspruch 13 oder 14, dadurch gekennzeichnet, daß die Leiterplatte (13) zugleich den Statorteil (14) eines Tachogenerators (11, 14) trägt.

16. Gleichstrommotor nach Anspruch 15, dadurch gekennzeichnet, daß der Statorteil des Tachogenerators (11, 14) als Mäandertachowicklung (14) ausgebildet ist.

17. Gleichstrommotor nach Anspruch 15 oder 16, dadurch gekennzeichnet, daß der Rotorteil des Tachogenerators (11, 14) von einem von den Rotoreisenteilen (7, 8) getragenen Magnetring (11) gebildet ist.

18. Gleichstrommotor nach einem der Ansprüche 8 bis 17, dadurch gekennzeichnet, daß die Rotoreisenteile einen Rotortopf (8), dessen Umfangswand die Spulen (17) von außen umgreift, und einen zu den Spulen (17) und dem Rotortopf (8) konzentrischen, auf der Innenseite der Spulen liegenden Rotorzylinder (7) aufweisen.

19. Gleichstrommotor nach Anspruch 18, dadurch gekennzeichnet, daß der Rotortopf (8) und der Rotorzylinder (7) zu einem einstückigen Rotorbauteil (9) zusammengefaßt sind.

20. Gleichstrommotor nach Anspruch 8 oder 9, dadurch gekennzeichnet, daß der Rotormagnet (10) an der zylindrischen Außenfläche des Rotorzylinders (7) angebracht ist.

21. Gleichstrommotor nach einem der vorhergehenden Ansprüche, dadurch gekennzeichnet, daß der Rotormagnet (10) und die Rotoreisenteile (7, 8) von der gleichen Stirnseite her gelagert sind wie die Spulen (17).

22. Gleichstrommotor nach einem der Ansprüche 18 bis 20 und Anspruch 21, dadurch gekennzeichnet, daß der Rotorzylinder (7) auf der vom Boden (33) des Rotortopfs (8) abliegenden Seite über eine Buchse (6) mit einer Antriebswelle (5) verbunden ist.

23. Gleichstrommotor nach einem der vorhergehenden Ansprüche, gekennzeichnet durch ein topfförmiges Gehäuse (22).

24. Gleichstrommotor nach Ansprüchen 12 und 23, dadurch gekennzeichnet, daß die Spulenhalterung (19) an der Innenseite des Bodens (35) des Gehäuses (22) befestigt ist.

25. Gleichstrommotor nach Anspruch 23 oder 24, dadurch gekennzeichnet, daß der Rotor (6 bis 10) an der Innenseite des Bodens (35) des Gehäuses (22) drehbar abgestützt und/oder gehaltert ist.

26. Gleichstrommotor nach Anspruch 18 und einem der Ansprüche 23 bis 25, dadurch gekennzeichnet, daß der Boden (35) des Gehäuses (22) und der Boden (33) des Rotortopfs (8) benachbart gegenüberliegenden Stirnseiten der Spulen (17) sitzen.

27. Gleichstrommotor nach einem der vorhergehenden Ansprüche, dadurch gekennzeichnet, daß Rotor und Stator des Motors zu einer mit einer Antriebswelle (5) lösbar verbindbaren vormontierten Einheit zusammengefaßt sind.

28. Gleichstrommotor nach Anspruch 17 und 18, dadurch gekennzeichnet, daß der Magnetring (11) des Tachogenerators (11, 14) an der vom Boden (33) des Rotortopfs (8) abgewendeten Stirnseite der Umfangswand des Rotortopfs angebracht ist.

29. Gleichstrommotor nach einem der vorhergehenden Ansprüche, dadurch gekennzeichnet, daß der Rotor (6 bis 10) des Motors einen Permanentmagnet (25) trägt, der an einem Magnetfeldsensor (24) vorbeiläuft.

30. Gleichstrommotor nach einem der Ansprüche 8 bis 29, dadurch gekennzeichnet, daß das Verhältnis zwischen dem mittleren Durchmesser (D) des zylindrischen Luftspalts (32) und der effektiven Leiterlänge (L) der Spulen (17) größer als 1 ist.

Fig. 1

Fig. 2

Fig. 3

0150070

0150070

Fig. 4

Fig. 5

Fig. 6

EU – 317

Fig. 7

13

14

0150070

Fig. 8

Fig. 9A

Fig. 9B

Fig. 9C

$$m = 3$$
$$n = 2$$

Fig. 9D

0150070

Fig. 10 A

m = 2
n = 1

Fig. 10 B

m = 2
n = 1

0150070

Fig. 10C

m = 2
n = 3

Fig. 11